# EUROPEAN PATENT APPLICATION

(11) **EP 4 663 857 A1**
(43) Date of publication of application: **17.12.2025**
(21) Application number: 25181544.5
(22) Date of filing: 09.06.2025
(51) Int. Cl.: E02F 9/22, B62D 7/15

(54) **A STEERING SYSTEM FOR A WORKING MACHINE**

(30) Priority: 12.06.2024 GB 202408428
(71) Applicant: J.C. Bamford Excavators Limited, Uttoxeter Staffordshire ST14 5JP (GB)
(72) Inventor: King, Sean, Uttoxeter, ST14 5JP (GB); Small, Charlie, Uttoxeter, ST14 5JP (GB); Davies, James, Uttoxeter, ST14 5JP (GB)
(74) Representative: Foot, Paul Matthew James

(57) **Abstract**

Disclosed is a working machine comprising: a ground engaging structure having a front pair of steerable wheels and a rear pair of steerable wheels; a body comprising a working arm which is operable by an operator to carry out a work task; a front steering actuator for adjusting the steering angle of each of the front pair of wheels to effect front wheel steering; a rear steering actuator for adjusting the steering angle of each of the rear pair of wheels to effect rear wheel steering; an operator steering device configured to provide a steering demand; and, an operator steering mode selector configured to select either a two wheel steer mode or a four wheel steer mode; wherein the front and rear steering actuators are selectively operable in accordance with the steering demand and selected two wheel steer mode or four wheel steer mode, wherein a steering ratio, which is the ratio of steering demand to turning angle of the front pair of wheels and/or rear pair of wheels is different in the two wheel steer mode and four wheel steer mode.

## Description

### FIELD

The present invention relates to a four wheel steering system for a working machine. Particularly, though not exclusively, the present invention relates to a working machine which uses "non-steering wheel steering" in which a joystick, roller or lever or the like is used to steer the vehicle.

### BACKGROUND

Various types of working machine (which may be referred to as working vehicles or off-highway vehicles or machines) are known for carrying out work tasks such as earth moving operations (e.g. excavating, grading, and loading), materials handling (e.g. transporting or otherwise moving loads or materials between or on a worksite) and agriculture. Examples of known machines include, for example, telescopic handlers, wheeled loaders, wheeled excavators, telescopic wheeled loaders, etc.

Slew excavators comprise a superstructure which is mounted in a continuously rotatable manner on an undercarriage. The superstructure includes a working arm arrangement for manipulating an attachment, such as a bucket, for excavating or earth moving operations, a prime mover, such as a hydrogen or diesel internal combustion engine, a hydraulic pump, and an operator cab. The prime mover drives the hydraulic pump, in order to provide hydraulic pressure for the working arm arrangement and, in some examples, to power one or more hydraulic motors located in the undercarriage that are used to selectively drive either two endless tracks or four wheels (or eight wheels in a dual wheel configuration) for propelling the excavator. If the slew excavator uses wheels for propulsion, a steering arrangement is used for either two or four wheels, and separate hydraulic control is required for this. Some wheeled excavators comprise the prime mover, batteries and a hydraulic pump in the undercarriage, thereby allowing the rotating slewing superstructure to be smaller with improved visibility, amongst other advantages. Tracked excavators are typically steered by controlling the left and right track speeds relative to one another using respective foot pedals or levers.

The working arm arrangement generally includes a boom pivotally connected to a dipper. There are several types of booms available including: a triple articulated boom which has two pivotally connected sections; and a mono boom that is often made from a single generally curved structure. A dipper is pivotally connected to the boom at one with the other comprising a mount for an attachment, e.g. a bucket. Hydraulic cylinders are provided to move the boom, dipper and attachment relative to each other so as to perform a desired working operation. Demand for the actuators is typically provided by joystick controls which provide the necessary hydraulic or electrical signals.

Material handling machines are capable of various loading operations and typically come in on of a select number of well-known formats. In telescopic handlers, also known as telehandlers, a vehicle chassis carries a telescopic working arm which extends in a fore-aft direction of the machine. The boom pivots about a horizontal axis towards the aft end of the machine and has a releasable attachment pivotably mounted to the fore end. Commonly used attachments include pallet forks and shovels, for example. Telehandlers may be used for general loading operations, e.g. transferring aggregate between locations on a construction site, and lifting operations, e.g. lifting building materials on to an elevated platform. Telehandlers are used extensively in the agricultural sector.

Telehandlers typically have two pairs of wheels provided on two axles for propulsion, with one or both axles being steerable and driven and one of the axles being pivotably mounted to allow all wheels to maintain ground contact on uneven ground. A prime mover (typically a diesel or hydrogen IC engine) may be located in a pod offset to one side of the machine between front and rear wheels or at the rear of the machine and may be connected to the wheels by a hydrostatic or mechanical transmission. An operator cab is located on one side of the machine to the side of the boom. Depending upon its intended application, the machine may be provided with deployable stabiliser legs.

A subset of telehandlers mount the cab and boom on a rotatable superstructure in order to combine lifting with slewing operations, at the expense of additional weight and greater height. As these machines are used principally for lifting, instead of loading, they have a longer wheelbase than conventional telehandlers to accommodate a longer boom, impacting manoeuvrability.

For some lifting operations, particularly those of heavy load, it is more appropriate to use a crane than a telehandler. Mobile cranes may be wheeled or tracked base. A boom, often a telescopic boom, is pivotally mounted to the base. Hoists, wire ropes or chains and sheaves are connected to the boom and used for moving materials from one location to another. The safety regulations for cranes are often stricter than the safety regulations for telehandlers.

Wheel loading shovels comprise an articulating chassis with a loader arm pivotally connected to the front part of the chassis and an operator cab and prime mover on the rear part of the chassis. Steering is effected by pivoting the front and rear chassis parts relative to one another.

A further type of working machine of relevance to the present disclosure is a backhoe loader which comprises a loader arm at the front and a working arm for excavating at the rear (a so-called backhoe).

The use of two wheel steer, 2WS, and four wheel steer, 4WS, is well known in working machines. In such vehicles, 2WS steer may be used for higher travel speeds, for example, when roading, whereas 4WS may be used for travelling at lower speeds, for example, when on a work site where a tighter turning radius is required.

In known 2WS/4WS applications, the steering ratio tends to be fixed such that a predetermined angular movement of an operator steering device, i.e. a steering wheel, causes a predetermined turning of the front and/or rear wheels, regardless of the steering mode. Hence, the steering ratio of the front wheels is the same whether in 2WS mode or 4WS mode meaning the steering of the vehicle is twice as sensitive in 4WS mode which is ideal for low speed operations.

The present invention seeks to provide an improved steering system for a working machine.

### SUMMARY

The present invention provides a working machine according to the appended claims.

A first aspect of the invention provides a working machine which may comprise:
a ground engaging structure having a front pair of steerable wheels and a rear pair of steerable wheels; and/or
a body comprising a working arm which is operable by an operator to carry out a work task; and/or
a front steering actuator for adjusting the steering angle of each of the front pair of wheels to effect front wheel steering; and/or
a rear steering actuator for adjusting the steering angle of each of the rear pair of wheels to effect rear wheel steering; and/or
an operator steering device configured to provide a steering demand; and/or,
an operator steering mode selector configured to select either a two wheel steer mode or a four wheel steer mode;
wherein the front and rear steering actuators may be selectively operable in accordance with the steering demand and selected two wheel steer mode or four wheel steer mode, and/or
wherein a steering ratio, which is the ratio of steering demand to turning angle of the front pair of wheels and/or rear pair of wheels is different in the two wheel steer mode and four wheel steer mode.

Optionally, the steering device comprises either a steering wheel or a secondary steering device (e.g. a steering roller), the machine further comprising a steering device selector configured to select either a steering wheel mode in which the steering wheel is the only steering device, or secondary steering mode in which the secondary steer device is activated.

Optionally, the four wheel steer mode is operable when the secondary steer mode is active and the steering ratio is reduced relative to the two wheel steer mode for a non-zero vehicle speed.

Optionally, the steering ratio in the four wheel steer mode is greater than 50% of a maximum steering ratio in the two wheel steer mode, optionally greater than 60%, optionally greater than 66%.

Optionally, the percentage steering ratios for the four wheel steer mode relate to the highest permissible travel speed in which the secondary steering mode is active.

Optionally, the two wheel and four wheel steer modes are the same at low speeds (e.g. below 3kph) and decrease as the vehicle speed increases, and wherein the four wheel steer ratio decreases more with an increase in travel speed.

Optionally, the working machine further comprises an electrically controlled proportional hydraulic steering valve and a controller, wherein the controller is configured to operate the steering valve in accordance with the steering demand and selected steering mode to provide the steering ratio.

Optionally, the steering ratio is dependent on vehicle speed and the controller is further configured to operate the steering valve in accordance with a vehicle speed.

Optionally, the controller is configured to operate the steering valve in accordance with a look-up table of steering valve actuation amount vs vehicle speed.

Optionally, the reduction in steering ratio is achieved by applying a scaling factor to the steering demand if four wheel steer mode is activated, wherein the scaling factor is predetermined.

Optionally, the scaling factor is adjustable, optionally by an operator of the vehicle via an operator input device.

Optionally, the front steering actuator and rear steering actuator are connected in hydraulic flow series.

Optionally, the front steering actuator and rear steering actuator comprise through-rod hydraulic cylinders.

Optionally, the steering selector further comprises a crab steer mode selection, wherein, optionally, the steering ratio in crab steer mode is the same in two wheel steer mode.

Optionally, the turning angle of the front wheels and rear wheels are the same in four wheel steer mode.

The skilled person will appreciate that except where mutually exclusive, a feature described in relation to any one of the aspects, embodiments or examples described herein may be applied mutatis mutandis to any other aspect, embodiment or example. Furthermore, except where mutually exclusive, any feature described herein may be applied to any aspect and/or combined with any other feature described herein.

### BRIEF DESCRIPTION OF DRAWINGS

Embodiments will now be described by way of example only with reference to the accompanying figures, in which:
Figure 1 shows a side view of a working machine according to the present disclosure;
Figure 2 shows a schematic representation of a steering system according to the present disclosure;
Figure 3 shows a schematic layout of a steering wheel arrangement in the form of a steering orbitrol;
Figure 4 shows a schematic layout of a secondary steering device;
Figure 5 shows a schematic layout of a steering valve arrangement;
Figure 6 shows a view of an operator seat having a joystick which comprises a secondary steering device.

### DETAILED DESCRIPTION

In the following detailed description, numerous specific details are set forth in order to provide a thorough understanding of various embodiments and the inventive concept. However, those skilled in the art will understand that: the present invention may be practiced without these specific details or with known equivalents of these specific details; that the present invention is not limited to the described embodiments; and, that the present invention may be practiced in a variety of alternative embodiments. It will also be appreciated that well known methods, procedures, components, and systems may have not been described in detail.

The present disclosure provides a working machine comprising a ground engaging structure having a front pair of steerable wheels and a rear pair of steerable wheels. The working machine may further comprise a body having a working arm which is operable by an operator to carry out a work task, e.g. excavation and/or material handling.

The working machine may comprise a front steering actuator for adjusting the steering angle of each of the front pair of wheels to effect front wheel steering and may comprise a rear steering actuator for adjusting the steering angle of each of the rear pair of wheels to effect rear wheel steering. The front and rear steering actuators may be selectively operable in accordance with the steering demand and a 2WS mode or a 4WS mode.

In prior art arrangements, the steering ratio, which is the ratio of steering demand to turning angle of the front pair of wheels and/or rear pair of wheels, is constant meaning that, when the 4WS mode is active, a given amount of steering demand will result in double the steering angle for the machine when compared with 2WS, as both the front and rear wheels each contribute to the steering angle in accordance with the steering demand.

This is a useful feature when using a steering wheel as it provides the operator with a greater sense of control and allows the steering to be applied more accurately when using 4WS, which can be useful at lower speeds or in confined spaces where 4WS is typically used. However, when using a secondary steering device, which may be referred to as "non-steering wheel steering", in which, for example, a stub lever or roller as may be mounted on an arm of the operator seat or a joystick, the range of motion of the secondary steering device is much reduced relative to a steering wheel, and the steering ratio provided by 4WS can become overly sensitive. That is, when using a stub lever or roller which is configured for fingertip control, a comparatively small movement on the lever or roller. This lack of steering resolution can result in an unintentionally large amount of steering making control of the vehicle more difficult. Historically, this has restricted the use of 4WS with secondary steering systems.

The present disclosure addresses this issue by reducing the steering ratio when in a 4WS mode, particularly when in a secondary steer mode.

The term steering ratio as used herein relates to the ratio of steering demand to turning angle of the front pair of wheels and/or rear pair of wheels. The steering ratio may be equated to a rate of steering speed. For example, as described below, the secondary steering device may be operable with an electronically operated proportional steering valve in which a controller provides a driving current in accordance with a steering demand. The magnitude of the driving current determines the amount the valve is opened and thus the hydraulic flow and associated steer rate speed achieved by the steering actuators. Thus the ratio of steering demand to driving current and the associated steer speed rate is the same to the steering ratio. Providing 100% of the available driving current will result in the maximum possible steering ratio, whilst providing half the available driving current for the same steering demand, will half the steering ratio.

The steering device may comprise either a steering wheel or a secondary steering device such as stub lever or roller. The secondary steering device may comprise a conventional joystick graspable by an operators hand or a stub lever mounted on an arm of the operator arm at a convenient location.

A suitable lever may be relatively short having a length of less than 40mm or 50mm, for example, and be arranged to pivot left and right about a horizontal axis. Such a lever may be referred to as a stub lever and may be adapted to be operated by a users digits. Pivoting the stub lever left effects left hand steering and pivoting right effects right hand steering.

In some embodiments, the secondary steering device may comprise a roller mounted on a joystick in which the direction of movement or rotation corresponds to the left and right steering directions. The roller may be configured to return to a central/neutral position when released. The roller may have radius of less than 20mm, optionally less than 15mm, optionally less than 12.5mm. The roller may move approximately 45degrees with side of centre, optionally less than 40degrees, optionally less than 35degrees. The linear or arcuate displacement length of the secondary steering device to effect a full steer angle may be between 5mm and 40mm from centre.

The roller may be placed on a joystick to enable fingertip control or thumb operation. Hence, the roller may be provided a forefinger position on the underside of a joystick or on the rear face of the joystick to be operable by a thumb.

The steering ratio may be dependent on the steering demand input device and the associated sensitivity. Hence, the steering ratio may be different for a steering wheel, where a full lock may be achieved with two full revolutions of the steering wheel, and a secondary steering device where full lock may be provided for an angular movement of 45 degrees from centre, for example.

As noted above, actuation of the secondary steering device may correspond to a steer speed rate. The secondary steering device may be a proportional secondary steering device in which a small displacement results in the steering angle being changed slowly, and a large displacement results in the steering angle changing more rapidly. Release of the secondary steering device results in the steering angle being maintained until the secondary steering device is moved in the opposite direction to take the steering angle off.

The steering arrangement may be configured to allow steering demand to be received by the steering wheel when in secondary steer mode. The steering arrangement may be configured to prioritise the steering wheel over the secondary steering device when the steering wheel is operated whilst secondary steer mode.

The 4WS mode may be operable for either or both of the steering wheel and secondary steering mode. In some embodiments, the adjustment of the steering ratio when switching between 2WS and 4WS may be provided only when the vehicle is in the secondary steering mode. Hence, if 4WS is operable when in steering wheel mode, the steering ratio for each of the front and rear wheels remains unaffected, thereby doubling the effective steering ratio for a given amount of demand from the steering wheel.

As known in the art, a 4WS capability of a working machine may be utilised to provide crab steering in which both sets of wheels may be aligned at a common angle to the machine undercarriage to allow traversing movement relative to the longitudinal axis of the machine. Hence, the steering selector further comprises a crab steer mode selection.

The steering ratio for crab steer maybe the same as the 2WS mode. However, in some embodiments, the steering ratio may be the 4WS steering ratio, for example, when in secondary steer mode.

The term secondary steering device is used herein to distinguish the steering device from a primary steering device such as a steering wheel. The secondary steering device may be characterised as having a small angular or linear throw or by being fingertip controlled. As noted above, the secondary steering device may be a joystick, stub lever or roller. The steering resolution which can be achieved with such devices is lower due to the smaller amount they are moved to provide a similar amount of steering angle as, for example, steering wheel.

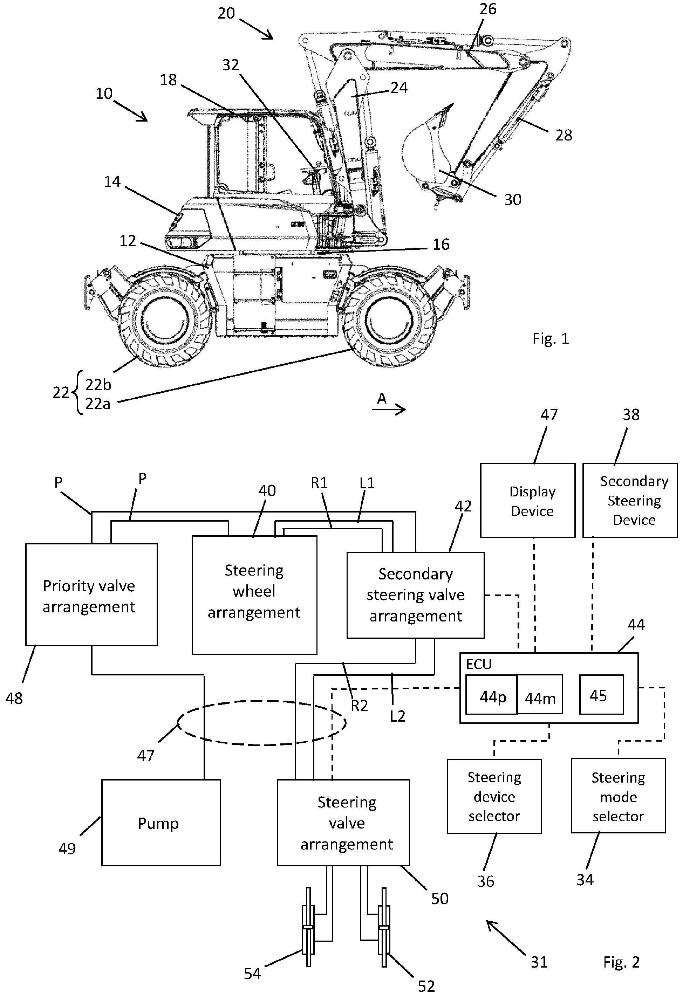

With reference to **Figure 1****,** there is illustrated a working machine 10 in the form of wheeled excavator according to an embodiment of the present disclosure. Although the working machine 10 of the illustrated embodiment is a wheeled excavator, the steering system of the present disclosure may be applied to any wheeled vehicle having four wheel steer.

The working machine 10 may comprise an undercarriage 12 with a superstructure 14 mounted to the undercarriage 12 by a slewing mechanism in the form of a slew ring 16. The slew ring 16 may permit unrestricted continual rotation of the superstructure 14 relative to the undercarriage 12. A cab 18 from which an operator can operate the working machine 10 is mounted to the superstructure 14. A working arm arrangement 20 is rotatably mounted to the superstructure 14 and provided for performing excavating operations, for example.

The undercarriage 12 is connected to a ground engaging structure 22, which in this embodiment includes first and second drive axles mounted to the undercarriage 12 with wheels 22a and 22b rotatably attached to each axle end. In this embodiment, the second drive axle is fixed with respect to the undercarriage, whereas the first drive axle is capable of limited pivoting, thereby permitting the wheels to remain in ground contact, even if the ground is uneven. The wheels 22a and 22b are typically provided with off-road pneumatic tyres.

For the purposes of the present disclosure, the arrow "A" shown in the fore-aft direction defines the principal direction of travel. An upright direction is defined as a direction substantially vertical when the working machine is on level ground. A lateral direction is defined as a direction that is substantially horizontal when the working machine is on level ground and is substantially perpendicular to the fore-aft direction A.

The working machine 10 comprises a working arm 20 in the form of an excavator arm. The excavator arm includes a triple section comprising a boom 24, a tab 26 and a dipper 28. The boom 24, tab 26 and dipper 28 are pivotably mounted with respect to each other with the boom 24 being pivotally connected to the superstructure 14. Hydraulic cylinders are operator controlled to raise and lower the respective sections of the working arm 20 relative to each in a conventional manner.

The distal end of the dipper 28 comprises a pivotally mounted work implement 30. In the illustrated embodiment the work implement is a bucket, but others are well known. A hydraulic cylinder is provided to rotate the implement 30 relative to the dipper 28.

In the illustrated embodiment, the working arm 20 is mounted via a king post which allows the working arm to be pivoted about vertical axis relative to the superstructure 14.

The superstructure 14 further comprises a counterweight at the rear of the machine, as well known in the art.

The operator cab 18 houses an operator's seat and machine controls. The machine controls will typically include the steering input devices, e.g. a steering wheel 32, joysticks to control operation of the working arm 20, switches for various operating and/or auxiliary functions, a hand throttle to set engine speed for working operations, a foot throttle to dynamically set engine speed for roading/manoeuvring, and a forward/neutral/reverse (FNR) selector to engage drive in a desired direction, all of which are conventional.

The operator cab 18 may also comprise one or more conventional user interface devices for receiving inputs from or providing outputs to the operator. In some embodiments, the user interface may comprise one or more mechanical switches, such as, for example, a push button, toggle switch, rocker switch, rotary knob, or slider, mounted in a convenient location such as on an arm rest or other part of the operator seat or adjacent the operator seat. In some embodiments, the user interface may comprise a digital display device which may be touch screen to allow selections or commands to be inputted by an operator in the operator seat.

With additional reference to **Figure 2****,** the operator cab 18 may comprise a steering mode selector 34 having different positions associated with the different steering modes, such as a first position relating to 2WS, a second position relating to 4WS and an optional third position relating to crab steer. The steering mode selector 34 may be physical switch such as, for example, a push button, toggle switch, rocker switch, rotary knob, or slider, mounted in a convenient location such as on an arm rest or other part of the operator seat or adjacent the operator seat, or a virtual switch which may be presented, for example on the touch screen display device, for example.

In the illustrated embodiment, the operator cab comprises a secondary steering device 38 which may be used in place of the steering wheel 32. The secondary steering device 38 may be controlled using a single hand and/or one or more digits of a single hand and may comprise a roller, slider or stub lever for example. The secondary steering device 38 will typically be mounted on the operator seat, for example, on an arm, as a distinct input device, or may be mounted as an input device on an operator joystick.

In the illustrated embodiment, the secondary steering device 38 is a roller mounted on the underside of the joystick so as to be controlled by an operators fore finger. In other embodiments, the roller may be provided on the rear of the joystick so as to be operated by a thumb. The joystick may be have a primary function such as operating the working arm 20 or some other function. The secondary steering input device 38 may be assignable by a user via the touch screen display.

In order to activate the secondary steering device 38, the operator cab 18 may include a steering device selector 36 which is operable to allow the operator to select the steering device from one or more of the available steering device, e.g. the steering wheel 32 and a secondary steering device 38. The steering device selector 36 may comprise an input device such as a switch having different positions corresponding to the different steering input devices provided in the working machine. The steering device selector 36 may be physical, e.g. a rotary switch, or virtual, e.g. presented on a touch screen display of the user interface, for example.

In more detail, **Figure 2** shows a schematic representation of a steering system 31 according to the present disclosure. The steering system 31 is configured to selectively provide 2WS and 4WS modes as desired by an operator or travel mode in which the vehicle is used and allows conventional steering with a steering wheel 32, or steering with a secondary steering device 38.

The steering system 31 may comprise a hydraulic pump 49, priority valve arrangement 48, steering wheel arrangement 40, secondary steering device valve arrangement 42, a secondary steering device 38, a controller in the form of an ECU 44, a steering device selector 36, a steering mode selector 34, a steering valve arrangement 50 and steering actuators 52, 54. The steering actuators in the illustrated embodiment are double-ended hydraulic cylinders have a single rod with a centrally placed piston. The rod protrudes from both ends of the cylinder body. The double-ended hydraulic cylinder is commonly used as a steering cylinder, and they can generate force in both directions. Typically, flow is provide to one side of the cylinder to displace the piston and provide a return flow from the opposite end of the cylinder.

The described steering arrangement is hydraulic, but this is not a limitation and other types of steering system, such as a fully electric system, may benefit from the concepts disclosed herein.

The hydraulic pump 49 may be any suitable pump which can provide a suitable flow to the steering actuators 52, 54. The pump 49 may be fixed or variable displacement pump for example, and may be driven by a prime mover, in the form of an internal combustion engine or electric motor. In the present example, the prime mover and pump 49 are located in the undercarriage of the working machine, but this is not a limitation.

The flow from the pump 49 is provided to the priority valve arrangement 48 in the superstructure of the working machine 10 via the slew joint 16 which is represented by dashed line 47 in Figure 2. The priority valve arrangement 48 may be conventional and configured to prioritise the flow of hydraulic fluid amongst the various hydraulic services on the machine 10. For example, the priority valve arrangement 48 may be configured to prioritise the flow of hydraulic fluid in the following order: 1) steering wheel arrangement 40; 2) secondary steering valve arrangement 42; and, 3) braking system (not shown). Hence, where there is a braking demand from an operator, hydraulic flow may be diverted from the steering wheel 32, and/or secondary steering system 31, thereby ensuring the brakes are suitably operable when the pump 49 is not being sufficiently driven to provide hydraulics to all of the systems. The use of priority valve arrangements for hydraulic systems are well known so this is not described further here.

The operator steering devices may comprise a steering wheel arrangement 40 and a secondary steering device 38 comprising a conventional steering wheel (not shown). The priority valve arrangement 48 provides the required hydraulic flow to the steering wheel arrangement 40 and secondary steering valve arrangement 42 according to the priority via hydraulic lines P.

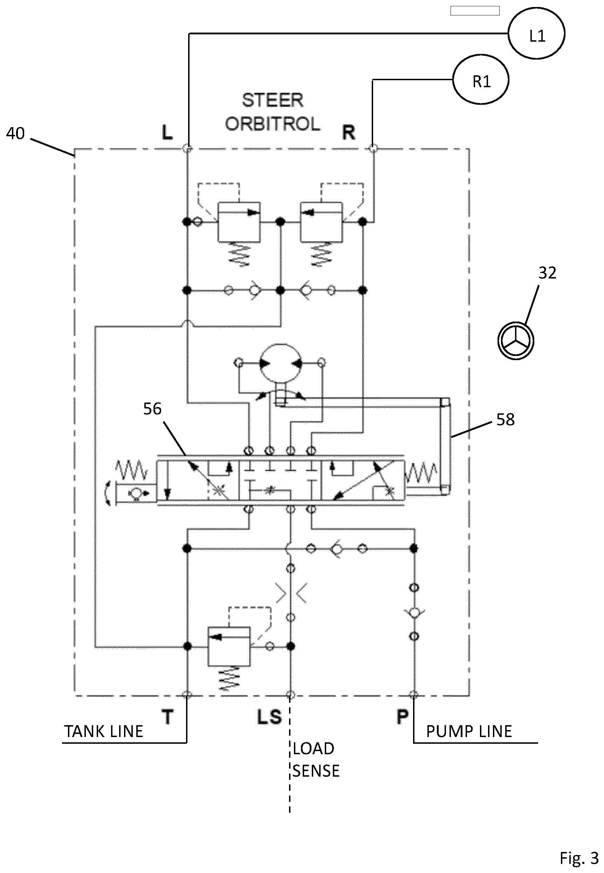

The steering wheel arrangement 40 is conventional and may comprise an orbitrol configured to provide emergency steering in the event of a loss of hydraulic pressure due to the engine failing or a pipe burst for example. Steering orbitrols are well known in off-highway machines. A typical example of an orbitrol schematic diagram is provided in Figure 3 for reference.

The steering wheel arrangement 40 is connected to the secondary steering valve arrangement 42 so as to provide the hydraulic flow from the steering actuation provided by the steering wheel 32. The pair of lines provided a right hand line R1 and left hand line L1 which are described further below.

The secondary steering valve arrangement 42 is operable using signals provided by the ECU 44 which receives the steering demand from the secondary steering device 38 when in the secondary steering mode. The secondary steer valve arrangement 42 may comprise one or more valves which are configured to provide a flow of hydraulic oil from the pump 49 (via the priority valve arrangement 48) to the steering valve arrangement 50 in accordance with a steering demand provided by an operator using a secondary steering device 38 in the operator cab. The connection to the steering valve arrangement 50 is via a pair of lines including a right hand line R2 and a left hand line L2 which are described further below.

As noted previously, the secondary steering device 38 may be any suitable single handed control, other than the steering wheel, which is movable by an operator to effect steering. The secondary steering device 38 may be movable side-to-side in relation to the fore-aft axis of working machine 10 and in keeping with a desired direction of steer. Hence, moving the secondary steering device to the left may cause a left hand steering angle and moving to the right may cause a right hand steering angle. The secondary steering valve arrangement 42 is shown in more detail in Figure 3.

The secondary steering device 38 may be a dedicated secondary steering device 38 with one degree of freedom (side-to-side) or may have multiple degrees of freedom (e.g. side-to-side and fore-aft) so as to be multi-functional. For example, the secondary steering device 38 may be used to provide steering and a direction of travel demand i.e. forward or reverse, or may be used to operate a working arm service or similar during a steering manoeuvre. In some embodiments, the secondary steering device 38 may have multiple uses and operate only as a secondary steering device 38 when in a secondary steer mode and may be assignable by a user.

The ECU 44 may be of a conventional type and include a processor 44p, memory 44m, input port(s) and an output port(s). The ECU 44 may be configured to receive inputs from the steering device selector 36, steering mode selector 34 and secondary steering device 38 when activated. Outputs from the ECU 44 are then used to control the secondary steering valve arrangement 42 in order to provide the required steering demand and the steering valve arrangement 50. When the selected steering device is the steering wheel 32 only, the secondary steering valve arrangement 42 may be configured to bypass a secondary steering device valve such that the hydraulic pressure from the steering wheel arrangement passes through to the secondary steering valve arrangement 42 and on to steering valve arrangement 50. In other embodiments, the hydraulic steering demand and secondary steering demand may be provided to the steering valve arrangement 50 directly, with the steering valve arrangement 50 being configured to select the appropriate feed on the basis of the inputs received from the ECU. Other configurations of selecting and providing the primary and secondary steering device hydraulic flows to the steering valve arrangement may be possible.

The ECU 44 may be configured to receive a steering demand from the secondary steering device 38, determine an output required to provide the requested steering angle based on the steering demand, and output a control signal to the secondary steer valve arrangement 42 and/or the steering valve arrangement 42 to effect the requested steering.

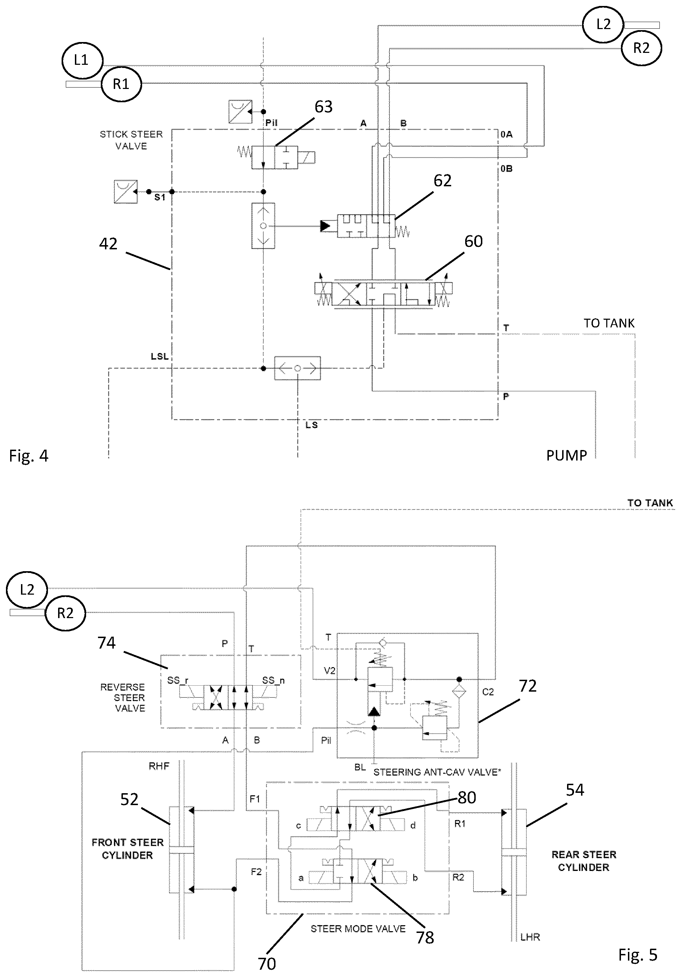

The steering valve arrangement 50, comprises a number of valves actuable to provide the required steering mode and steering demand to the steering cylinders 52, 54. An example of a suitable steering valve arrangement 50 is shown in Figure 4.

**Figure 3** shows a steering wheel arrangement 40 in the form of an orbitrol which may be used to effect steering in the system disclosed herein. The steering wheel 32 is provided in the operator cab 18 and is rotatable by hand by an operator to provide a steering demand in a conventional manner. The orbitrol valve 56 is a proportional valve and coupled to the steering wheel 32 such that rotation of the steering wheel 32 causes rotation of the mechanical coupling 58 to move the valve 56 in the required direction. Steering to the right shifts the steering valve spool to the left as shown thereby connecting the pump P to the right steering output indicated as R1 and into the secondary steering valve 42 (see Figure 4). Steering to the left shifts the spool of the steering valve to the right as shown thereby connecting the pump P to the left steering output indicated as L1 and into the secondary steering valve 42 (see Figure 4). When flow is provided to R1 the return to tank is provided by L1 and vice versa due to the connections in the steering valve arrangement 50 and steering actuators 52, 54. The operation of the orbitrol in an emergency mode is not described here. However, the operation in this mode replaces the flow of hydraulic fluid from the pump with that created by the pump driven directly by the steering wheel 32.

The orbitrol 40 also includes a load sense circuit in which a load sense output LS receives a metered flow of hydraulic oil when the steering valve spool 56 is moved left or right in accordance with the steering demand. The load sense output LS is used in the priority valve arrangement 48 as described above, and to provide a signal to the secondary steering valve arrangement 42 to allow the secondary steering mode to be disengaged when the steering wheel 32 is operated. In doing so, the steering wheel 32 input has priority over the secondary steering device and prolonged or unintentional concurrent operation may be prevented.

**Figure 4** shows a secondary steering valve arrangement 42 which may be used in the steering system of the present disclosure. The secondary steering valve arrangement 42 includes a secondary steering valve 60 which is a proportional solenoid operated spool valve which receives electrical signals from the ECU 44 in accordance with the secondary steering demand. Hence, when the ECU 44 receives a steering demand from the secondary steering device 38 and the secondary steer mode is selected, appropriate actuating signal is provided in accordance with the desired left or right steering demand to shift the spool lever left or right to provide hydraulic flow from the pump P to the outputs L2 and R2. L2 and R2 are continued in Figure 5 which is described further below. The return flow from the steering actuators 52, 54 is provided by the other of the L2 and R2 to return to tank, also described below.

The actuating current received from the ECU 44 at the secondary steering valve 60 is determined by the ECU 44 in accordance with the steering mode and steering demand received from the secondary steering device 38. The value of the activating current can be determined to provide a given steering ratio, which is the ratio of steering demand to turning angle. The steering ratio for the front pair of wheels 22a and/or rear pair of wheels 22b may be different in the two wheel steer mode and four wheel steer mode.

The amount by which the steering ratio differs may be varied in accordance with a desired sensitivity. In some embodiments, this may be dictated by the size and/or range of movement of the secondary steering device 38 and may be factor set by the manufacturer. Additionally, or alternatively, the steering ratio may be selectable by an end user or machine owner. In some embodiments, it may be preferable to allow an operator to set the steering ratio to suit a particular application or preference.

The setting of the steering ratio may be set independently for the 2WS and 4WS or may be set relative to one another, i.e. an operator may be able to select a scaling factor for the 4WS ratio relative to the 2WS ratio using, for example, the display device. The selection of the steering ratio maybe dependent on the steering device being used. That is, there could be a first 4WS ratio, which may be the same as the 2WS ratio, when using a steering wheel, and may be a second 4WS ratio when using the secondary steer device. It will be appreciated that the ECU 44 may have no bearing on the steering ratio when using the steering wheel 32. This may be determined solely by the hydraulic arrangement.

In some embodiments, the steering ratio in the 4WS mode may be between 30% and 70% of the steering ratio in the two wheel steer mode. In some embodiments, the steering ratio may advantageously be between 40% and 60% of the steering ratio in the two wheel steer mode, optionally between 45% and 55%, optionally 50% of the steering ratio in the two wheel steer mode.

The ECU 44 may be configured to determine the required amount of steering from the or each pair of wheels using a steering ratio which is the ratio of steering demand to turning angle of the front pair of wheels and/or rear pair of wheels. The steering ratio may be predetermined or may be provided by a look-up table stored in the ECU 44 or elsewhere.

In the illustrated embodiment, the ECU 44 comprises a look-up table 45 from which the required steering signal can be determined in accordance with a predetermined steering ratio and steering demand. The ECU 44 may comprise a plurality of look-up tables 45 in which each is associated with a different steering ratio. Each table may be associated with an operating mode or operating condition which is associated with a predetermined steering ratio, for example.

The 4WS steering ratio may be selected on the basis of the operating conditions of the vehicle. For example, the 4WS steering ratio may be selected based on one or more of: ground conditions, weather conditions, or the type of work which is being carried out. The steering ratio may be higher to provide more sensitive steering when repositioning the machine for excavation work or may be lower when moving a load, where a greater degree of accuracy and control may be required. The operating mode may relate to a particular attachment the use of a excavating bucket, a flail, a surface planar or some other attachment, for example.

In some embodiments, the steering ratio may be dependent on vehicle speed. Hence, in determining what the 2WS and 4WS steering ratios the vehicle speed may be taken into account and predetermined steering ratio applied accordingly. In some embodiments, it may be that 4WS and/or secondary steer is disabled at higher speeds, or when the machine is configured for a particular mode of operation, such as roading.

Table 1 below shows an illustration of some example steering ratios which may be applied in dependence of travel speed. Thus, at 0 or 3 kmph, the activation of the secondary steering valve is achieved using the full solenoid current to enable maximum displacement of the spool and the fastest change in steering angle. As the speed vehicle speed increases, the steering speed (which defines the steering ratio) reduces down to 54% of full speed steering for 2WS and 33% for 4WS. Hence, at 20kmph the 2WS steering ratio is approximately half that of the 0-3kmph steering ratio and the 4WS is around a third.

The third column in Table 1 provides the relative steering ratios between the 2WS and 4WS at each speed. Hence, the steering ratio is the same for 2WS and 4WS at 0-3kmph, but the 4WS is around two thirds the 2WS steering ratio at 20kph.

**Table 1 - steering speed as a percentage of full actuation speed steering for different speeds**

| Kph | 2WS (%) | 4WS (%) | 4WS/2WS |
|---|---|---|---|
| 0 | 100 | 100 | 1.00 |
| 3 | 100 | 100 | 1.00 |
| 6 | 98 | 74 | 0.76 |
| 8 | 84 | 59 | 0.70 |
| 11 | 74 | 51 | 0.69 |
| 14 | 64 | 43 | 0.67 |
| 17 | 58 | 37 | 0.64 |
| 20 | 54 | 33 | 0.61 |

Providing a travel speed sensitive change to the steering ratio allows the sensitivity of the steering to be reduced as the working machine travels faster. As 4WS is inherently more sensitive due to it including the combined steering angles of the front and rear wheels, the steering ratio is reduced by a greater amount with increased speed, but still provides the operator with an increased sensitivity in the 4WS mode as is expected for a 4WS modes.

In other embodiments, the setting of the steering ratios may be simplified such that when the traveling speed is below 10kmph the scaling factor may be 1, meaning that the steering ratio is set to provide the most sensitive steering. When the steering speed is over 10kmph, the steering ratio may be scaled by a factor of 0.5 such that the steering becomes less sensitive in the 4WS mode. It will be appreciated that it will be possible to provide a gradient of vehicle speed vs steering ratio in accordance with specific requirements, as shown in Table 1. Providing a graduated vehicle speed vs steering ratio and altering the steering ratios independently for 2WS and 4WS modes allows the steering operation of the working machine to be optimised for particular uses and preferences.

The travel speed of the working machine may be any deemed suitable. In the example provided in Table 1, the highest permissible travel speed is 20kph. However, this may be greater or less than that. In some embodiments, the travel speed when secondary steering is activated may be 24kph or 14kph or 11kph for example.

The ECU 44 may comprise one or more look-up tables which include a travel speed and a scaling factor which is applied to the driving signal for the secondary steer valve 60, or which determines which look-up table should be used to determine the driving signal.

In some embodiments, the operator may select a 4WS steering ratio to suit a particular preference. The selectable steering ratios may be preset using one or more buttons, either physical or on a display, or may be finely adjustable. For example, an operator touch screen may comprise one or more virtual switches for selecting the steering ratio from a discrete number of options, or toggling between two values. In other embodiments, the virtual switch may comprise a slide bar for selecting any of a predetermined number of values. The selection of the steering ratio may be selected as part of an operating mode selection or in accordance with a user profile.

In some embodiments, the ECU 44 may be configured to determine the steering ratio in accordance with a steering demand and apply a scaling factor to the steering demand if four wheel steer mode is activated. Providing a scaling factor may provide a simple way in which the steering ratio can be adjusted by a preset amount. For example, the steering ratio may be scaled by a factor of 0.5 (i.e. 50%) when switching between 2WS and 4WS modes. The scaling factor may be predetermined or may be adjustable, either by an operator or in accordance with an operating mode of the machine. The scaling factor may be adjustable via an operator input device, such as a touch screen display.

Returning to **Figure 4****,** the secondary steering valve arrangement 42 may include a load sense circuit which operates a disable valve 62 in secondary steering valve arrangement 42. In the illustrated embodiment, the load sense circuit comprises a hydraulic load sense LSL feed from the steering orbitrol and a pilot feed circuit Pil which is controlled via solenoid valve/isolating valve 63 upon command from the ECU 44. The ECU 44 determines whether to activate the solenoid valve 63 and deactivate the secondary steering on the basis of information relating to the steering wheel 32 being used.

The load sense line LSL provides pressure from orbitrol when there is significant rotation of the steering wheel. However, this may be inadequate when the movement of the steering wheel is small or transient, for example. In order to address this and provide an improved deactivation strategy, the steering wheel arrangement 40 may comprise a steering angle sensor (not shown) configured to provide the ECU with an indication of angular displacement and/or a rate of rotation of the steering wheel 32. In determining the steering wheel angle and/or rate of angular movement, it is possible to determine whether there is an input from the steering wheel 32 more accurately, particularly for corrective steering where intermittent left and right steering may be employed to maintain a desired trajectory. Further, it allows some fault tolerance for accidental movements of the steering wheel to be assessed prior to fully disengaging the secondary steering device. This potentially avoids disengaging the secondary steering device when in use and the movement of the steering wheel is unintentional, but also ensures that the secondary steering device 38 is disengaged when an operator uses the steering wheel 32.

The operation of the fault tolerance for disengaging the secondary steering device 38 may comprise an assessment of the steering wheel input (i.e. angle or angular speed) to determine whether the use is continuous and/or intentional. In some embodiments, the ECU 44 may be configured to determine one or more of the angular extent of the steering wheel operation, the duration of the steering wheel input, the speed of rotation, the frequency of the steering wheel input within a given time window, or any other parameter that may be indicative of the continuous and/or intentional use.

The ECU 44 may also assess whether the secondary steering device 38 is in a neutral position when the steering wheel 32 is operated. If the secondary steering device 38 is operational, i.e. a non-neutral position, it may be indicative that the secondary steering device is being used in which case, the secondary steering device may be active.

In one embodiment, a signal from the steering angle sensor is received by the ECU 44 and assessed to determine whether it is above a predetermined threshold. The predetermined threshold may relate to a permitted angle of displacement or an angular displacement per second. If the threshold is exceeded, the ECU 44 may temporarily pause the secondary steering mode by activating the isolator 63 to displace the spool in disable valve 62 such that the steering wheel feed is provided to the steering valve arrangement 50.

Upon pausing the operation, a pause timer may be started in which further steering wheel 32 activity is monitored for. If no other steering wheel inputs are detected within a predetermined time window, e.g. 10s, the secondary steering mode may reactivated by deactivating the disable valve 63. The reactivation may be subject to certain conditions, such as ensuring the secondary steering device is in a neutral position and providing the operator with a warning, for example.

The secondary steering device 38 pause may be set for a predetermined period of time required to determine whether there is a steering input which is indicative of permanent use. For example, if an operator is using the steering wheel 32 to provide corrective steering, it may only be used intermittently within the pause window. In which case, the operator may be using the steering wheel as the primary steering device but with only minor inputs. The applicants have found a pause window of between 5s and 15s, optionally between 8s and 12s, optionally 10s to provide adequate time to assess for continuous use.

In addition to setting a pause window, the ECU 44 may be configured to monitor for the number of operations within the pause window. For example, if there are over a predetermined number of operations, e.g. 4, within the pause window, this may be indicative of corrective or intermittent steering. The applicants have found that a number of uses between 3 and 6, optionally 4 or 5, may be indicative of the intermittent use of the steering wheel 32 as the primary steering device and disable the secondary steering mode thereafter.

If the secondary steering mode is deactivated, the operator may be provided with an audible or visual warning such as a buzzer or LED on a control panel or the joystick. The warning may be haptic in some embodiments, e.g. by vibrating the joystick.

In some embodiments, the steering wheel 32 and secondary steering device 38 may be used in conjunction with one another whilst the fault tolerance analysis is being carried out. Hence, the disable valve 62 may include a first position in which the steering wheel 32 input and secondary steering device 38 may be used, and a second position in which the output from the steering wheel 32 is fed through the disable valve 62 to the steering valve arrangement 50.

In some embodiments, the ECU may be configured to provide the operator with a visual or audible indication that the secondary steering device is to be deactivated. This may occur when movement of the steering wheel is first detected or after a predetermined number of uses or extent of usage (e.g. following a particular angular input). In other embodiments, the ECU may temporarily pause the secondary steering e.g. for 1s, and reinstating it thereafter if there is no additional steering wheel inputs.

The output LS is a load sense line which extends back to the priority valve arrangement to provide a dynamic balanced load sense circuit as well known in the art.

**Figure 5** shows a steering valve arrangement 50 which may be used in the steering system of the present disclosure. The steering valve arrangement 50 comprises a steering mode valve 70, a steering anti cavitation valve 72 and a reverse steer valve 74. The steering valve arrangement 50 receives the hydraulic flow from the output of the secondary steer arrangement 42 via L2 and R2.

The inputs L2 and R2 flow through the reverse steer valve 74 which either provides a straight through flow or a crossover flow independence with the direction the operator is facing. That is, when the operator cab 18 is facing the forwards direction, the left and right steering inputs result in left and right hand steering, and when the operator cab 18 is facing rearwards, the left and right steering inputs are switched by the reverse steer valve 74 so that the steering inputs apply in relation to the direction faced by the operator and the direction being travelled in. The operation of the reverse steer valve may be achieved using one or more limit switches or other positional sensors which can determine the position of the cab 18 relative to the undercarriage.

The L2 input is provided via the steering anti cavitation valve arrangement 72 which is provided to reduce anti-cavitation which may occur in the steering actuators. A detailed explanation of this is not required for the present disclosure so a detailed explanation is not provided. However the skilled person will be aware of such arrangements in the art.

The steering mode valve 70 comprises a 4WS valve 78 and a crab steer valve 80 which are solenoid valves which receives inputs a,b,c,d from the ECU 44 in accordance with the steering mode selection.

With the 4WS valve in the position shown, the steering inputs L2 and R2 correspond to two wheel steering in relation to the front cylinder only. As such, a hydraulic flow is received from R2 or L2 in accordance with the desired steering demand direction. Assuming a right hand steer is required, flow is received from R2, flows through the anti-cavitation valve 80 and 4WS valve 78 and into the left hand cylinder of the front steering cylinder 52. This shifts the piston to the right and provides a return flow from the right hand cylinder back to tank via L2. The return to tank will either be via the secondary steering valve 60, or the orbitrol 40, depending on whether the secondary steering device is activated.

When a 4WS steering mode is selected by the operator solenoid b of the 4WS valve is energised to shift the spool to the right and provide the hydraulic flow to the rear steer cylinder 54 via the crab steer valve 80. Assuming a right hand steering direction again, the input flow from R2 is provided to the rear steer actuator through the 4WS valve 78 via the crab steer valve 80. In the position shown, the crab steer valve 80 is disengaged such that the flow exists the valve at port R1 which causes the rear steer cylinder 54 to shift to the left (downwards as shown in the Figure) to steer to the left. The return flow is provided to port R2, through the crab steer valve 80, through the 4WS valve 78 to port F2 and on to the front steering actuator 52 to effect right hand steering. Thus, the front and rear steering actuators 52 and 54 are steered in opposite directions thereby providing an equal and opposite amount of steering and effecting 4WS in a conventional manner. Fkiw returns to the take via L2, as described above. Energising solenoid a returns the spool to the position shown and 2WS mode.

When the crab steer valve 80 is actuated and the spool moved to the left as shown and the direction of the hydraulic flow to the rear steer actuator 54 is reversed, thereby providing crab steering in which both the front and the rear wheels are turned in the same direction by corresponding amounts to provide conventional crops tearing.

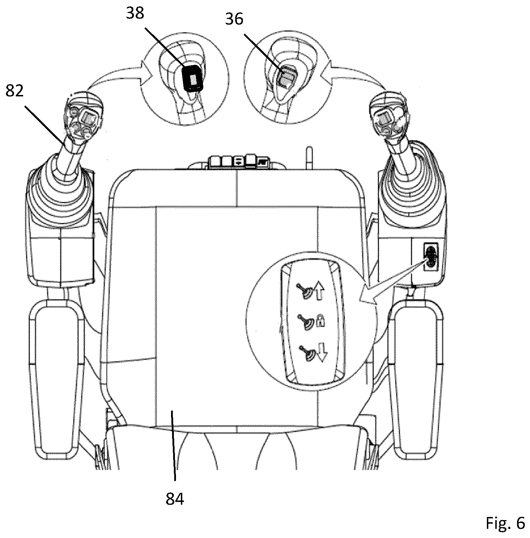

Figures 6 and 7 show an interior of a working machine in the form of a backhoe loader which is configured to have 4WS and a secondary steering device. The backhoe loader is additionally configured to have a reverse drive capability so as to be driveable when the seat is facing rearwards. In the illustrated embodiment, the secondary steering device is the only means of steering the machine when in a reverse drive mode. However a steering wheel is provided for the steering when forward facing in a conventional manner.

Figure 6 shows an example of a secondary steering device 38 located on the underside of the joystick 83 which is provided on the arm rest of the operator seat 84. The joystick(s) 83 may include other input devices to allow the secondary steering to be activated (i.e. a steer device selector 36), for example. Providing the secondary steering device 38 on the underside of the joystick 82 provides a comfortable position for operating the secondary steering.

The one or more embodiments are described above by way of example only and it will be appreciated that the these may vary within the scope of the claims. These variations are possible without departing from the scope of protection afforded by the appended claims.

## Claims

1. A working machine comprising:
a ground engaging structure having a front pair of steerable wheels and a rear pair of steerable wheels;
a body comprising a working arm which is operable by an operator to carry out a work task;
a front steering actuator for adjusting the steering angle of each of the front pair of wheels to effect front wheel steering;
a rear steering actuator for adjusting the steering angle of each of the rear pair of wheels to effect rear wheel steering;
an operator steering device configured to provide a steering demand; and,
an operator steering mode selector configured to select either a two wheel steer mode or a four wheel steer mode;
wherein the front and rear steering actuators are selectively operable in accordance with the steering demand and selected two wheel steer mode or four wheel steer mode,
wherein a steering ratio, which is the ratio of steering demand to turning angle of the front pair of wheels and/or rear pair of wheels is different in the two wheel steer mode and four wheel steer mode.

2. The working machine of claim 1, wherein the steering device comprises either a steering wheel or a secondary steering device (e.g. a steering roller), the machine further comprising a steering device selector configured to select either a steering wheel mode in which the steering wheel is the only steering device, or secondary steering mode in which the secondary steer device is activated.

3. The working machine of claim 2, wherein the four wheel steer mode is operable when the secondary steer mode is active and the steering ratio is reduced relative to the two wheel steer mode for a non-zero vehicle speed.

4. The working machine of any preceding claim, wherein the steering ratio in the four wheel steer mode is greater than 50% of a maximum steering ratio in the two wheel steer mode, optionally greater than 60%, optionally greater than 66%.

5. The working machine of claim 4, wherein the percentage steering ratios for the four wheel steer mode relate to the highest permissible travel speed in which the secondary steering mode is active.

6. The working machine of claim 5, wherein the two wheel and four wheel steer modes are the same at low speeds (e.g. below 3kph) and decrease as the vehicle speed increases, and wherein the four wheel steer ratio decreases more with an increase in travel speed.

7. The working machine in any preceding claim, further comprising an electrically controlled proportional hydraulic steering valve and a controller, wherein the controller is configured to operate the steering valve in accordance with the steering demand and selected steering mode to provide the steering ratio.

8. The working machine of claim 6 or claim 7, wherein the steering ratio is dependent on vehicle speed and the controller is further configured to operate the steering valve in accordance with a vehicle speed.

9. The working machine of claim 8, wherein the controller is configured to operate the steering valve in accordance with a look-up table of steering valve actuation amount vs vehicle speed.

10. The working machine of any of claims 4 to 9, wherein the reduction in steering ratio is achieved by applying a scaling factor to the steering demand if four wheel steer mode is activated, wherein the scaling factor is predetermined.

11. The working machine of claim 10, wherein the scaling factor is adjustable, optionally by an operator of the vehicle via an operator input device.

12. The working machine of any preceding claim, wherein the front steering actuator and rear steering actuator are connected in hydraulic flow series.

13. The working machine of claim 12, wherein the front steering actuator and rear steering actuator comprise through-rod hydraulic cylinders.

14. The working machine of any preceding claim, wherein the steering selector further comprises a crab steer mode selection, wherein, optionally, the steering ratio in crab steer mode is the same in two wheel steer mode.

15. The working machine of any preceding claim, wherein the turning angle of the front wheels and rear wheels are the same in four wheel steer mode.
